(19) Europäisches Patentamt
European Patent Office
Office européen des brevets

(11) **EP 2 597 504 A2**

(12) **EUROPEAN PATENT APPLICATION**
published in accordance with Art. 153(4) EPC

(43) Date of publication:
**29.05.2013 Bulletin 2013/22**

(51) Int Cl.:
***G02B 27/22*** *(2006.01)*

(21) Application number: **11812721.6**

(22) Date of filing: **20.07.2011**

(86) International application number:
**PCT/KR2011/005329**

(87) International publication number:
**WO 2012/015191 (02.02.2012 Gazette 2012/05)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **24.07.2010 KR 20100071695**

(71) Applicant: **Chung, Hyunin**
**Seoul 142-100 (KR)**

(72) Inventor: **Chung, Hyunin**
**Seoul 142-100 (KR)**

(74) Representative: **Winkler, Andreas Fritz Ernst**
**Boehmert & Boehmert**
**Pettenkoferstrasse 20-22**
**80336 München (DE)**

(54) **THREE-DIMENSIONAL IMAGE DISPLAY PANEL STRUCTURE**

(57)    The present invention relates to a structure of a multi-viewpoint stereoscopic image display panel using an integral photography method, and more specifically, to a structure of a display panel, which can expand an effective angle of view (viewing angle) by changing an array of an interlaced (multiple division synthesis) flat image pattern and enhance sharpness of an image by removing an image jump phenomenon.

In the present invention, there is provided a structure of an integral photography display panel including a lens array layer 10 on which unit convex lenses 11 are arranged to be offset each other, an interlace layer 30 positioned at a focal distance t1 below the lens array layer 10, and a focal distance securing layer 20 for positioning the interlace layer at the focal distance of the lens array layer, wherein the interlace layer 30 is stacked in a structure of so-called brick layering in which a center of a unit image is arranged to be aligned with a center of a unit convex lens using an image photographed from multi-viewpoints and interlaced into a rectangle as the unit image 32.

Fig. 7

**Description**

## BACKGROUND OF THE INVENTION

### Field of the Invention

The present invention relates to a structure of a multi-viewpoint stereoscopic image display panel using an integral photography method, and more specifically, to a structure of a display panel, which can expand an effective angle of view (viewing angle) by changing an array of an interlaced (multiple division synthesis) flat image pattern and enhance sharpness of an image by removing an image jump phenomenon.

### Background of the Related Art

A lenticular technique or a parallax barrier technique is mainly used as a glasses-free stereoscopic image display technique. Most of the techniques are a twin lens type which provides disparity images to left and right eyes. Since a twin lens type image is a stereoscopic image provided by binocular viewpoints (two viewpoints) of one person, it is difficult to correctly display a motion parallax when an observer moves his or her head or a multi-viewpoint stereoscopic image that can be shown to a plurality of people.

Although a technique of horizontally interlacing an image while a lenticular lens sheet is tilted in the diagonal direction has been tried in order to solve the problem (Korean Laid-opened Patent No. 10-2007-0072590, inventor; Levecu Xavier, Title of the invention; "Lenticular auto-stereoscopic display and method, and auto-stereoscopic image synthesizing method related thereto"), the interlacing process is complex, and it is difficult to align the slope of the lens sheet which forms lenses and vertical and horizontal unit pitches of a minimum pixel which configures an interlaced screen, and thus the technique is difficult to realize.

Generally, an interlaced image is an image created by compressing images of an object photographed at two or more viewpoints into one image so as to be seen stereoscopically. It is since that viewing angles of two eyes of a person are slightly different and the object is seen stereoscopically if the two eyes simultaneously see two images of different angles.

Accordingly, if a plurality of images observed from angles of two or more viewpoints is compressed and created as an image, a multi-viewpoint stereoscopic image of a further wider angle of view beyond the viewpoint of one person is created, and such an image can be stereoscopically reproduced and viewed through a lenticular lens sheet or a barrier sheet.

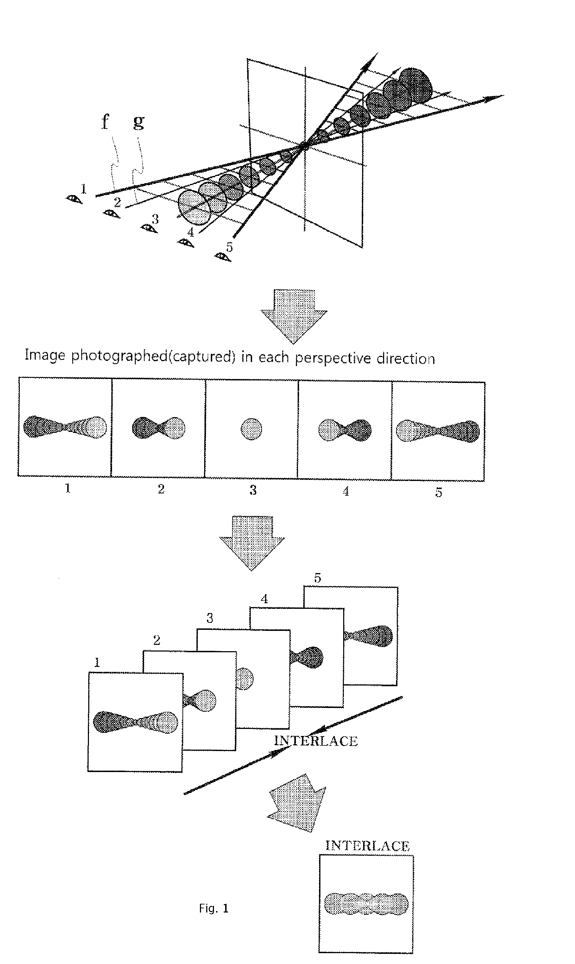

FIG. 1 is a view showing a process of dividing, synthesizing, reconfiguring and compressing (interlacing) an image seen at five viewpoints, and a composite flat image created as such is referred to as an interlace pattern image (hereinafter, a repeated pattern unit is referred to as a 'unit image', a divided image configuring the unit image is referred to as a 'unit pixel', and the entire pattern where the unit images are arranged is referred to as an 'interlace layer').

Since the interlace procedure needs a very complicated calculation, it is collectively processed through computer programming recently.

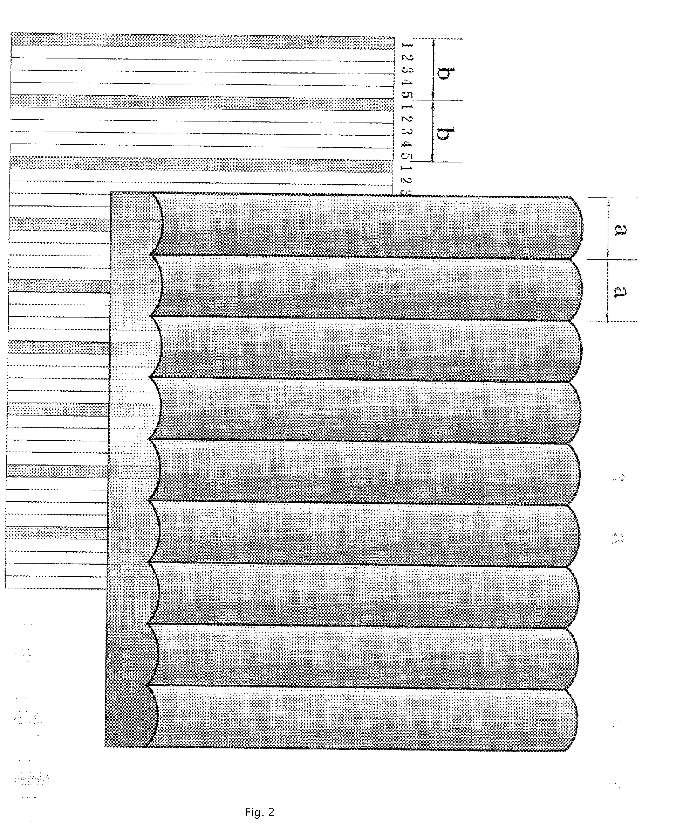

FIG. 2 is a view showing a method of applying the interlace image created in FIG. 1, i.e., an interlace layer 30 compressing a unit image photographed at five viewpoints, to a conventional lenticular stereoscopic technique, and there are some problems in the technique.

Observing the prerequisite fabricating conditions, first, the interlaced compression image is created by dividing an image of first to fifth viewpoints into small pieces and interlacing the divided images, and as shown in FIG. 2, the unit image is created as a pattern in vertical lines repeated at regular pitch intervals.

There are five viewpoints in the unit image 35 of the interlace layer of the lenticular technique, and if there are more stereoscopic reproduction viewpoints, a further precise and superior stereoscopic material can be fabricated. However, if there are more stereoscopic reproduction viewpoints, a further larger amount of data should be managed and printed, or a method of displaying an image and processing an angle of view should be further precise.

Second, pitch b intervals at which the unit image 35 of the lenticular interlace layer is repeated should be the same as the pitch of a lens having a half-cylinder shape formed on the lenticular lens sheet, and the angle of the arranged lenses also should be precisely aligned so as to line up with the lenticular lens sheet in the vertical line.

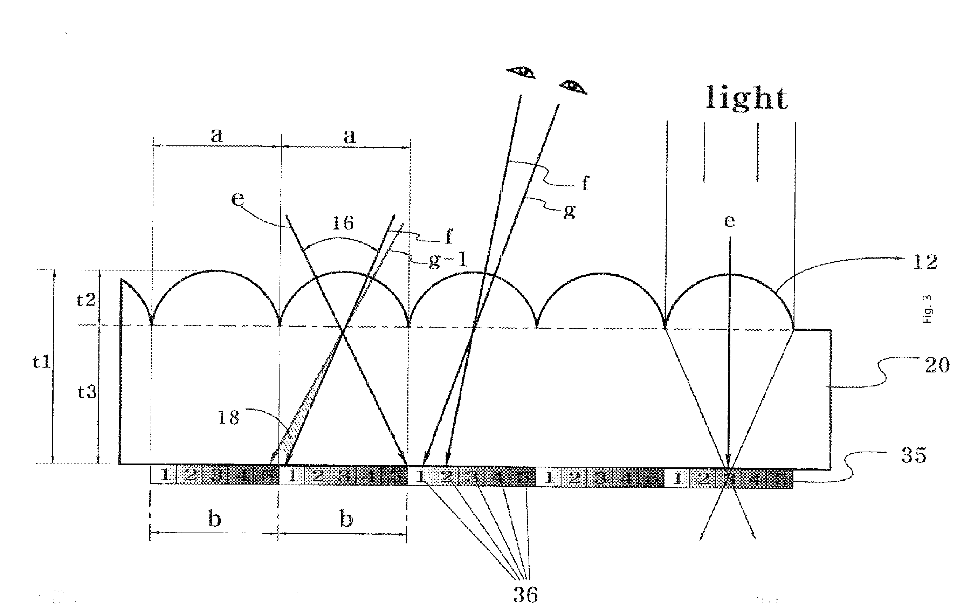

Third, since an 'effective angle of view 16 of a lenticular lens for stereoscopic perspective' is determined depending on the curvature of a convex lens as shown in FIG. 3, interlace unit pixels 36 (a configuration unit divided into 1 to 5 and sequentially synthesized) should be arranged at a distance forming the focus of the lenticular lens 12 within the range of angle of view so as to be shown sequentially.

In the end, a conventional fabricating method corresponding to the basic stereoscopic perspective principle should satisfy the three conditions described above, and this is related to the range of an angle of view according to the direction of view and alignment of the interlace unit pixels according to the direction of perspective reproduction.

However, there are largely two problems in the lenticular technique. One of the problems is that since the interlace unit image is a vertical line, the angle of view is narrow, and thus there is a limit in fabricating a multi-viewpoint interlace layer. The other problem is a phenomenon in which an image looks dizzy at an angle of view larger than an effective angle of view since adjacent unit pixels are overlapped (an image jump phenomenon).

For example, as shown in FIG. 3, a stereoscopic object may be shown at each viewing angle only when a person simultaneously sees unit pixels 1 and 2, 2 and 3, 3 and 4 and 4 and 5 in which a binocular cross angle of view f and g of two eyes is within the effective angle of view 16, and if adjacent unit pixels 5 and 1 are simultaneously viewed f and g-1, both eyes simultaneously see the conflicting images 5 and 1, and thus the person feels dizzy.

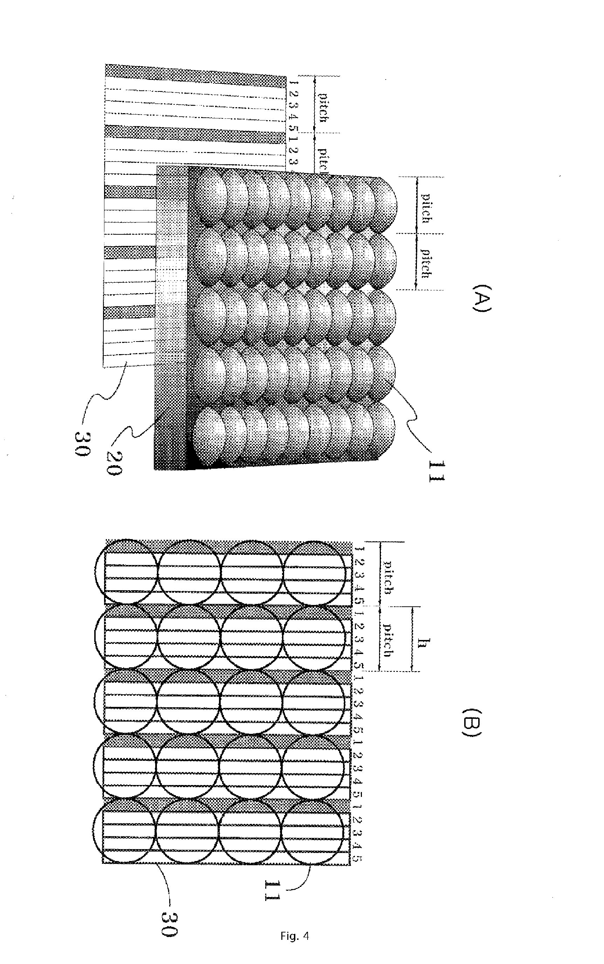

In addition, a vertical angle of view is not secured in the lenticular technique. However, the vertical angle of view is accomplished by arranging hemisphere shape convex lenses in place of the cylinder shape convex lenses as shown in FIG. 4.

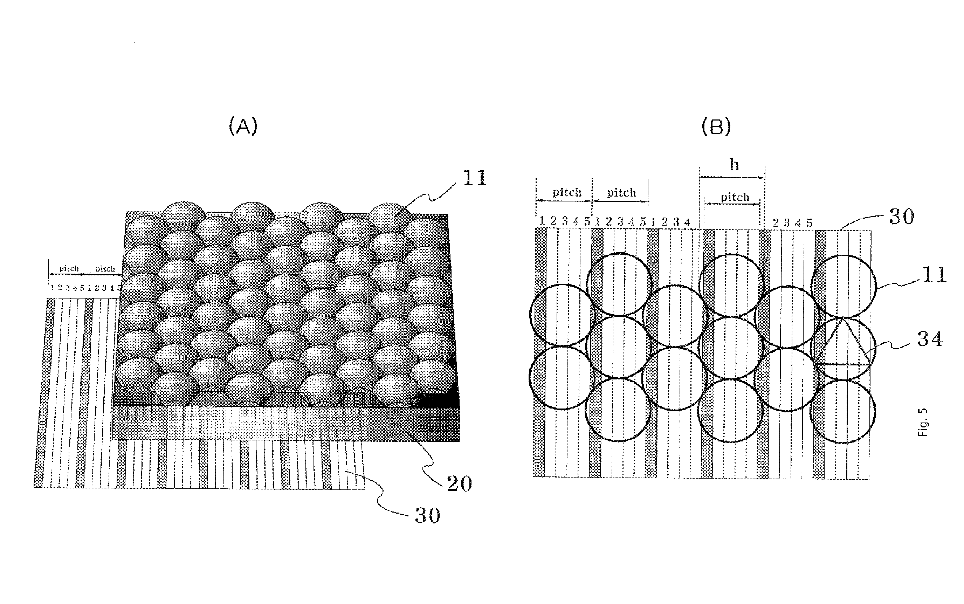

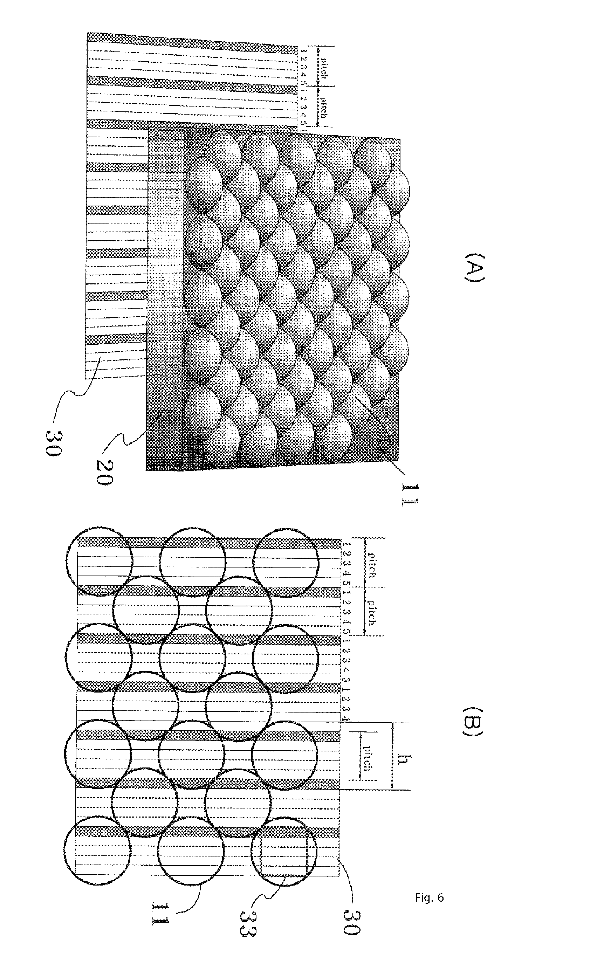

However, the range of the horizontal angle of view is unchanged, and if lenses are arranged as shown in FIGS. 5 and 6 and the lenses are of the same type, the interlace unit image has a size of the base line of a triangle 34 or a rectangle 33 inscribed within the lens, and this is further smaller than that of FIG. 4, and thus the multi-viewpoint is difficult to secure.

Accordingly, in the present invention, a lens array and an array structure of interlace unit images appropriate to the lens array are created by applying integral photography, and a variety of means for preventing image jump are prepared, and thus the problems occurring in the conventional lenticular technique are solved.

## SUMMARY OF THE INVENTION

An object of the present invention is to provide a stereoscopic image display panel capable of expanding an effective angle of view to the maximum while displaying all kinds of flat images as stereoscopic images by applying an integral photography technique.

Another object of the present invention is to provide a variety of means capable of removing an 'image jump phenomenon' so as to secure a clear image on an integral photography stereoscopic image display panel.

Still another object of the present invention is to provide a stereoscopic image display that can be mounted on a printed object or on the surface of a display such as a TV or the like.

Still another object of the present invention is to provide a variety of complementary means for providing further clear images.

Still another object of the present invention is to provide a display panel capable of selectively displaying a flat image or a stereoscopic image.

The first object is accomplished by claims 1 to 8.

Specifically, the stereoscopic image display panel includes a lens array layer 10 on which unit convex lenses 11 are arranged to be offset each other, an interlace layer 30 positioned at a focal distance t1 below the lens array layer 10, and a focal distance securing layer 20 for positioning the interlace layer at the focal distance of the lens array layer. The interlace layer 30 is configured as a structure of so-called brick layering in which the center of a unit image 32 is arranged to be aligned with the center of a unit convex lens using an image photographed from multi-viewpoints and interlaced into a rectangle as the unit image 32.

The convex lenses of the lens array layer 10 are arranged in horizontal and vertical directions, and a straight line passing through centers of adjacent lenses intersects with a vertical line at a slope of 45 or 60 degrees in a x shape so as to form an array of a so-called honeycomb shape.

Preferably, horizontal and vertical sizes of the unit image 32 arranged on the interlace layer 30 are such that the horizontal size A is a distance between two points where two vertical lines v2 and v3 vertically passing through the centers of left and right lenses adjacent to a reference convex lens intersect with a horizontal line h1 horizontally passing through the center of the reference convex lens, and the vertical size B is one half of a distance h2 - h3 connecting the centers of vertically arranged adjacent lenses.

The convex lens of the lens array layer may be replaced with a pinhole, and the size, the shape and the minute position of the pinhole are preferably controlled by an electrical signal.

Although the shape of the convex lens is preferably a hemisphere shape (a polygon), the convex lens may be configured as a plate using a material of a different refractive index. Although a circular shape is used as a cross section of the layer, horizontal and vertical refractive indexes are different from each other, and if a lens of an oval shape having a long width is used, a further wider angle of view can be secured.

Although the convex lens is generally arranged such that the top of the lens, i.e., the convex portion, faces the surface of the panel, if the convex lens is reversely arranged so that the top of the convex lens formed on the surface of the sheet faces the interlace layer, a further wider angle of view can be secured. In this case, the focal distance securing layer should be formed of a transparent medium having a refractive index lower than that of the lens, or the focal distance securing layer should be in a cavity state.

The second object is accomplished by claims 9 to 15 or 17.

A jump image phenomenon is first removed by forming a view angle induction mask 50 between the lens array layer 10 and the focal distance securing layer 20.

As another method, a coating layer using total reflection or a cavity layer can be formed instead of the view angle induction mask, and if both of the means are combined, a further higher efficiency can be obtained.

As still another method, a blind mask 55a can be installed in the focal distance securing layer 20 instead of the view angle induction mask, or a blind mask 55 can be installed on the lens array layer 10.

The third object is accomplished by claim 8. That is, if an image displayed on the interlace layer of the present invention is printed, the display panel can be used as a device which displays the same object at all times, and if the display panel of the present invention is mounted on the surface of a display such as a TV or the like and an interlaced image is projected thereon, various types of stereoscopic images can be replaced at regular intervals, or they can be provided as stereoscopic moving images.

The fourth object is accomplished by forming a low refractive resin coating layer 80 ($\rightarrow$ 40) having a refractive index lower than that of the convex lens on the surface of the lens array layer 10 (claim 16), removing unnecessary residual images by forming a residual image removal mask 110 on the surface of a space between the convex lenses 11 (claim 21 $\rightarrow$ 20), or controlling the size, the position or the transparency of the perspective blocking stripe 52 of the view angle induction mask or the pinhole 101 using an electrical signal (claim 11 or 19).

Finally, a means for selectively displaying a flat image or a stereoscopic image is accomplished by forming the focal distance securing layer 20 as a cavity layer so that the distance between the lens array layer 10 and the interlace layer 30 may be adjusted as described in claims 21 and 22. Accordingly, in this case, it is preferable that the focal distance securing layer is a cavity layer or filled with a low refractive liquid material having a refractive index lower than that of the convex lens.

## BRIEF DESCRIPTION OF THE DRAWINGS

FIG. 1 is a view showing the process of fabricating an interlace image.

FIG. 2 is a view showing the structure of a lenticular lens sheet.

FIG. 3 is a view showing the principle of a lenticular lens sheet.

(A) and (B) of FIGS. 4, 5 and 6 are views showing a relation between various lens arrays and the width of a unit image.

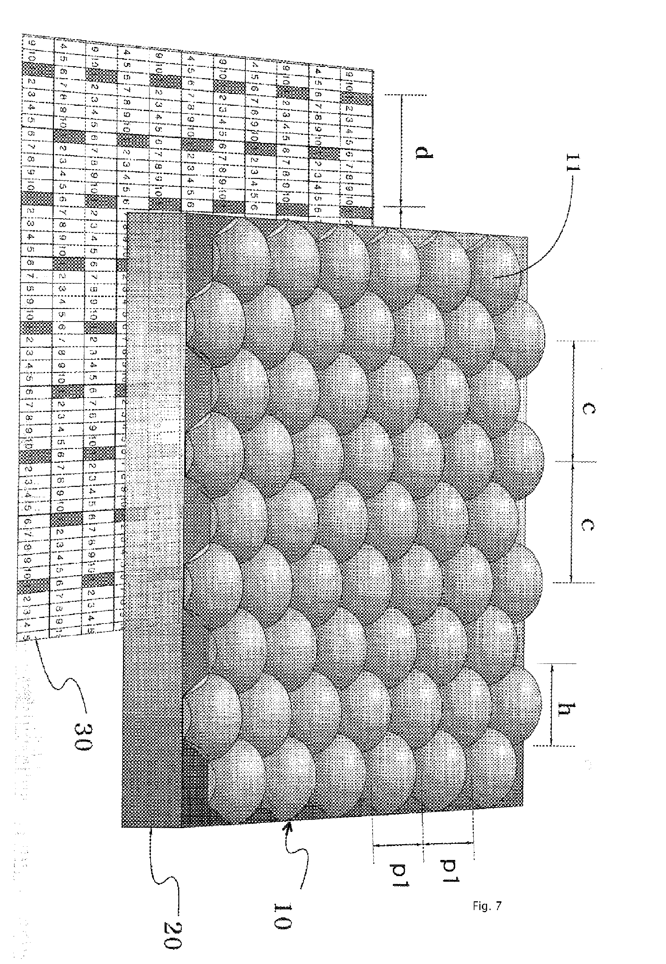

FIG. 7 is a view showing the concept of the present invention.

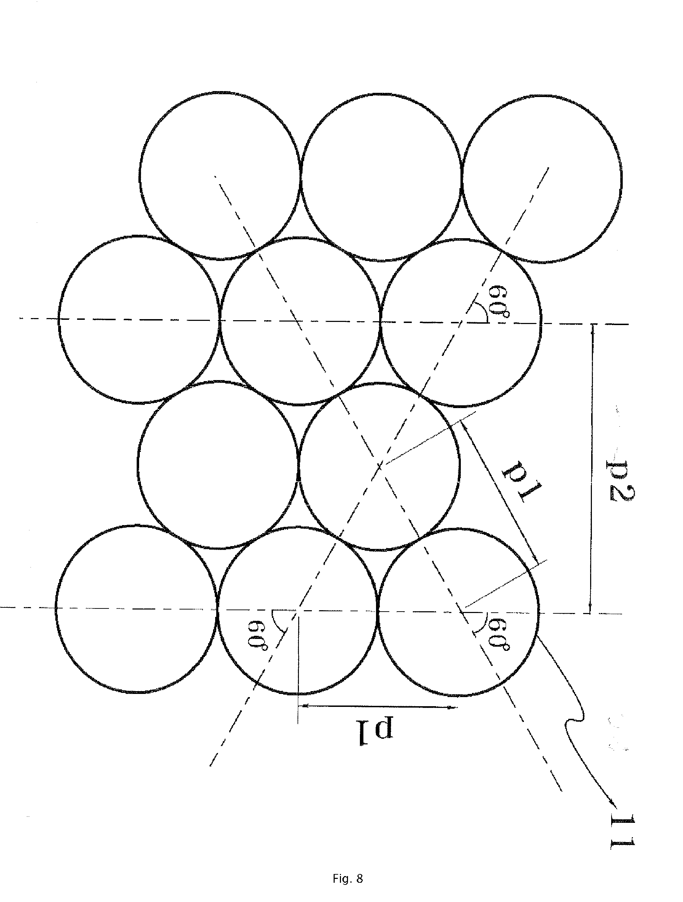

FIG. 8 is a view showing a lens array structure offset by 60 degrees.

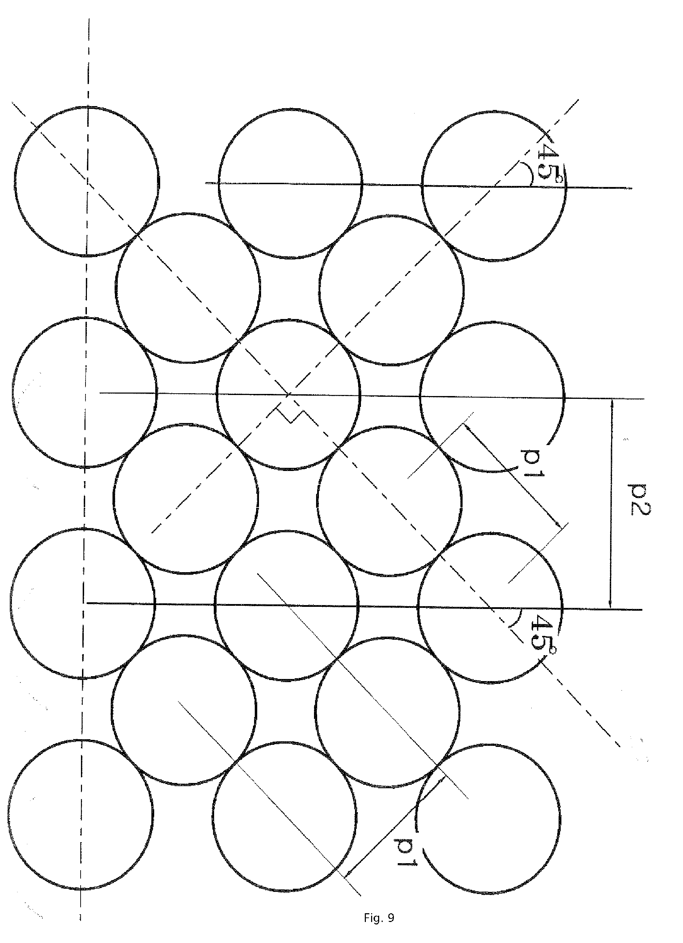

FIG. 9 is a view showing a lens array structure offset by 45 degrees.

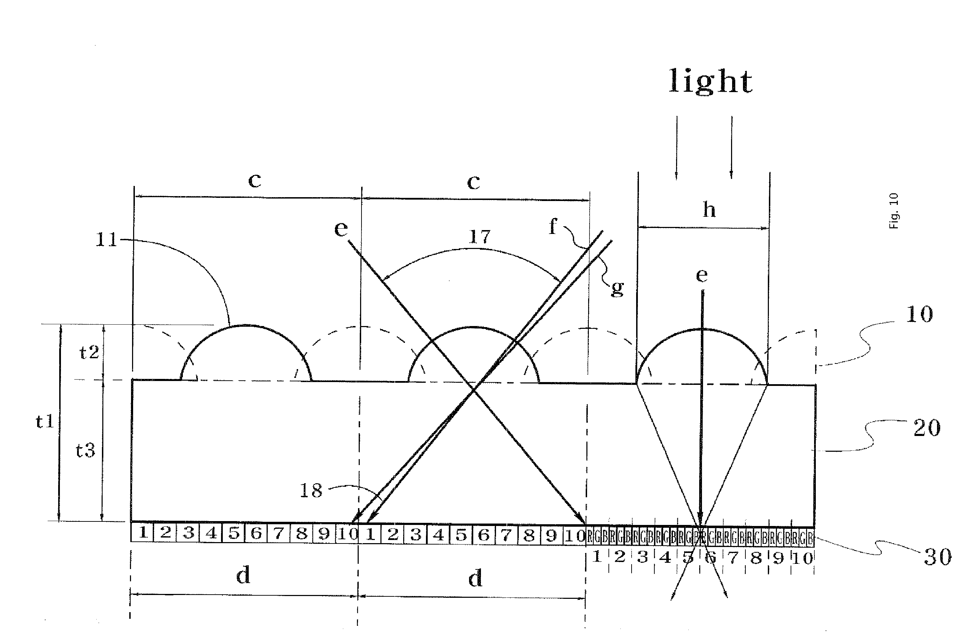

FIG. 10 is a view showing the cross section of Fig.7.

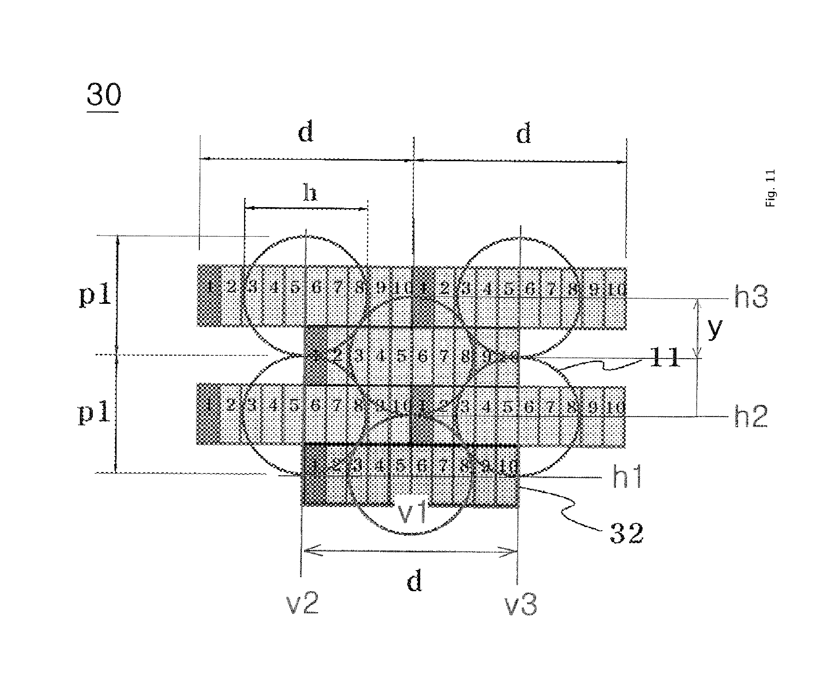

FIG. 11 is a view showing a lens array and arrangement of unit images on the interlace layer.

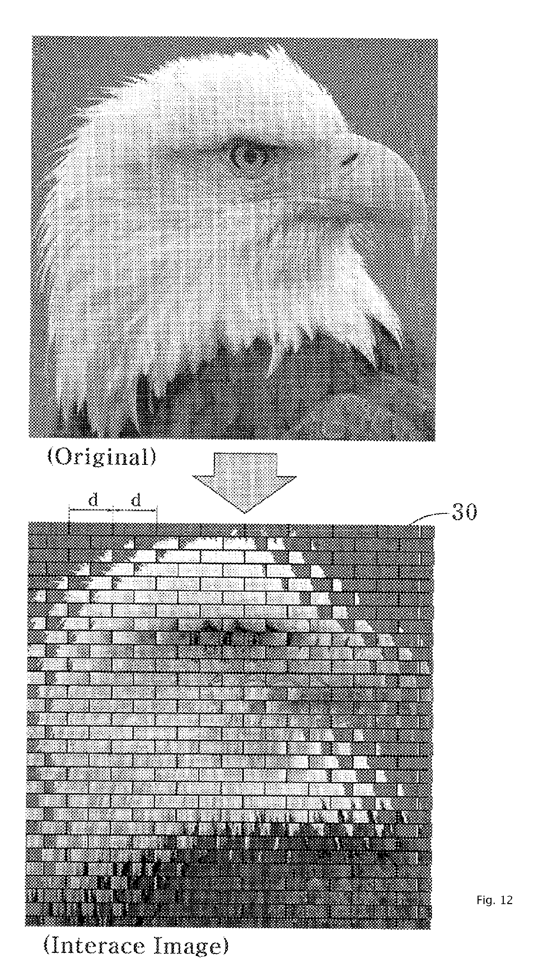

FIG. 12 is a view showing an original image and a picture on the interlace layer.

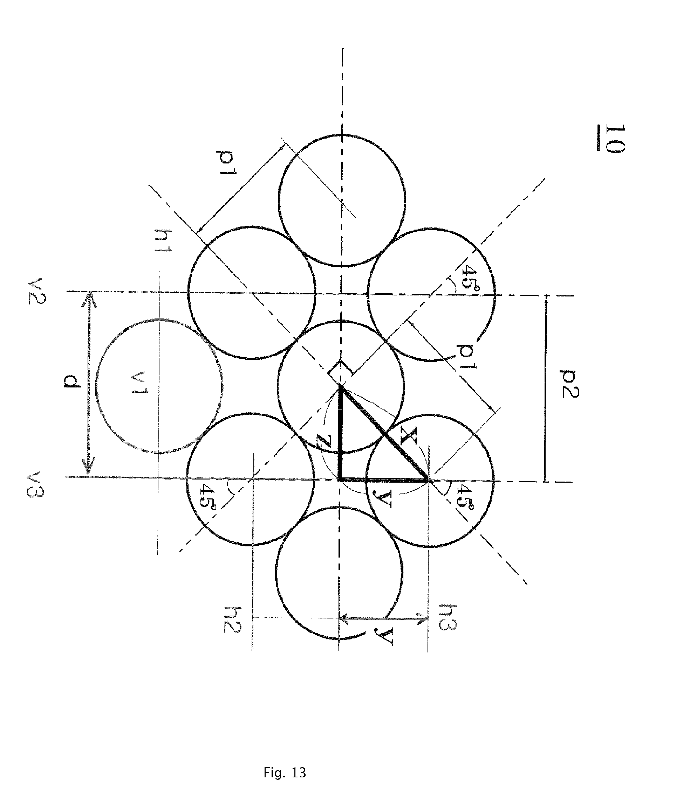

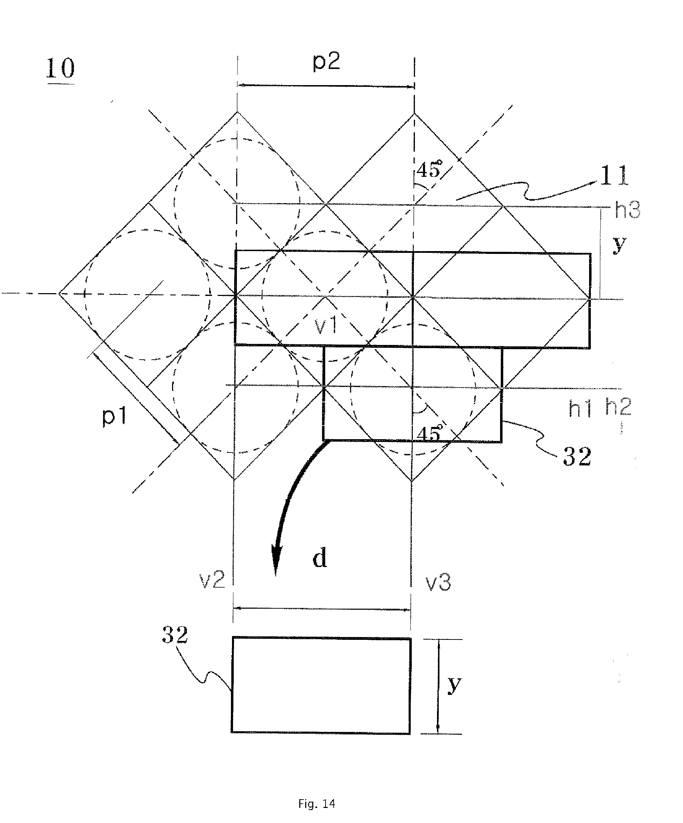

FIGS. 13 to 17 are views showing a relation of the width of a unit image with a lens type and a lens array.

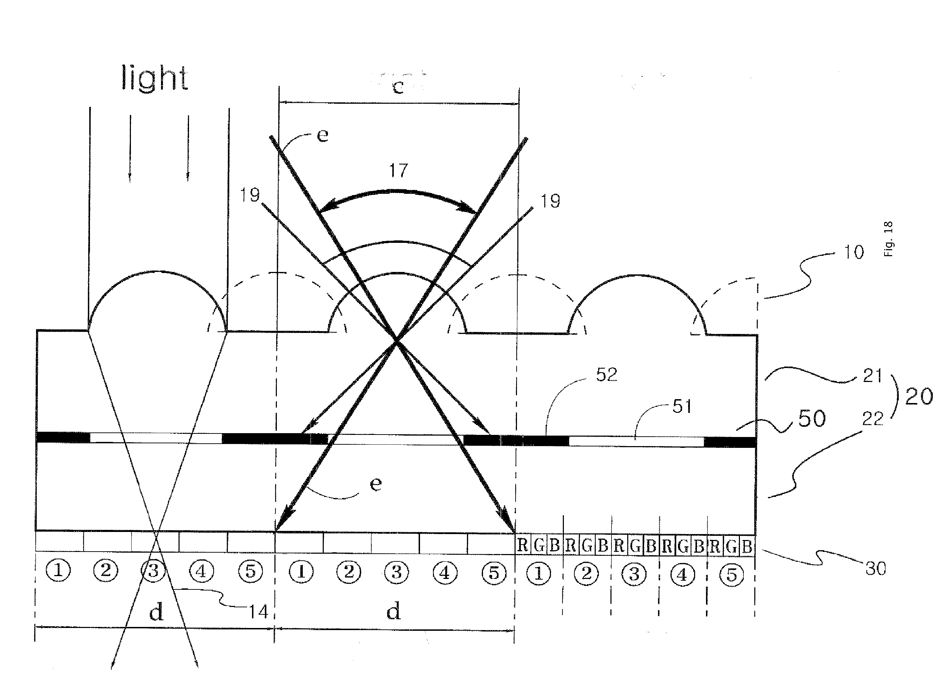

FIG. 18 is a cross-sectional view showing an embodiment in which a view angle induction mask is installed.

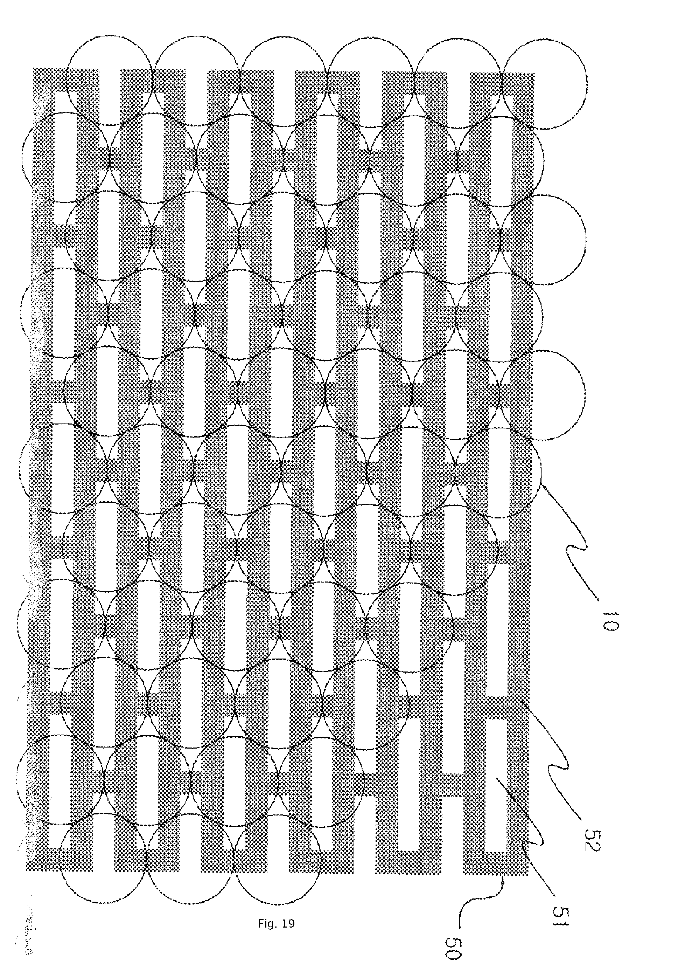

FIG. 19 is a view showing a relation between a lens array and a view angle induction mask.

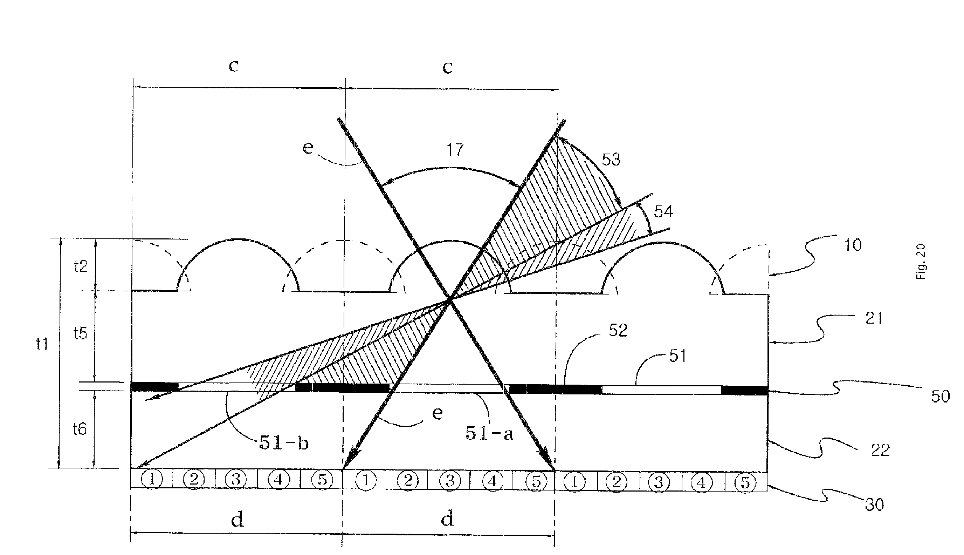

FIG. 20 is a view showing the concept of blocking angles of adjacent pixels in FIG. 18.

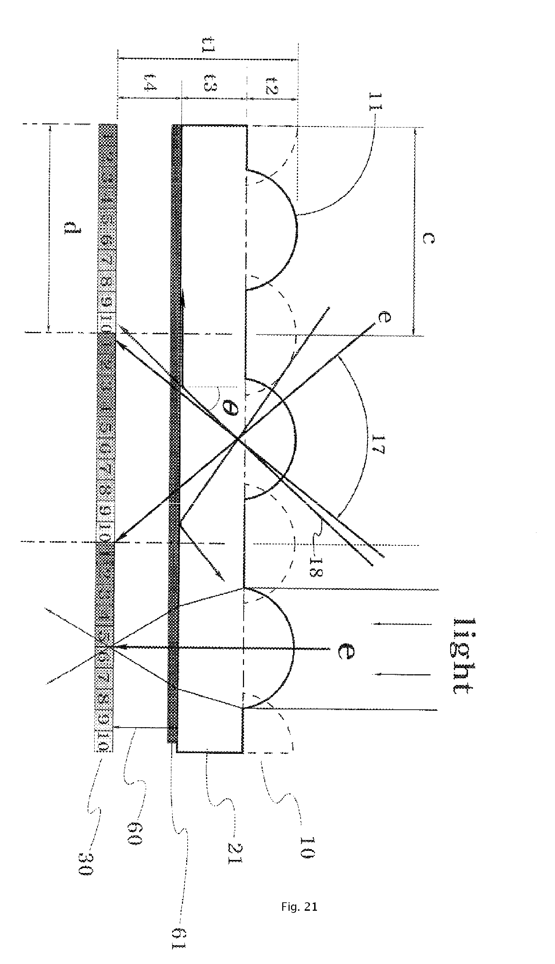

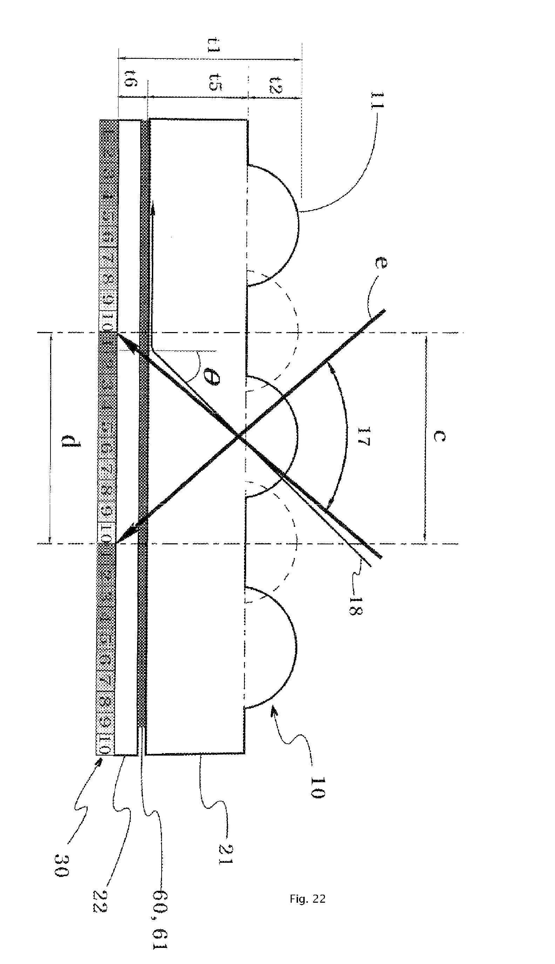

FIGS. 21 and 22 are cross-sectional views showing embodiments in which a total reflection induction layer is installed.

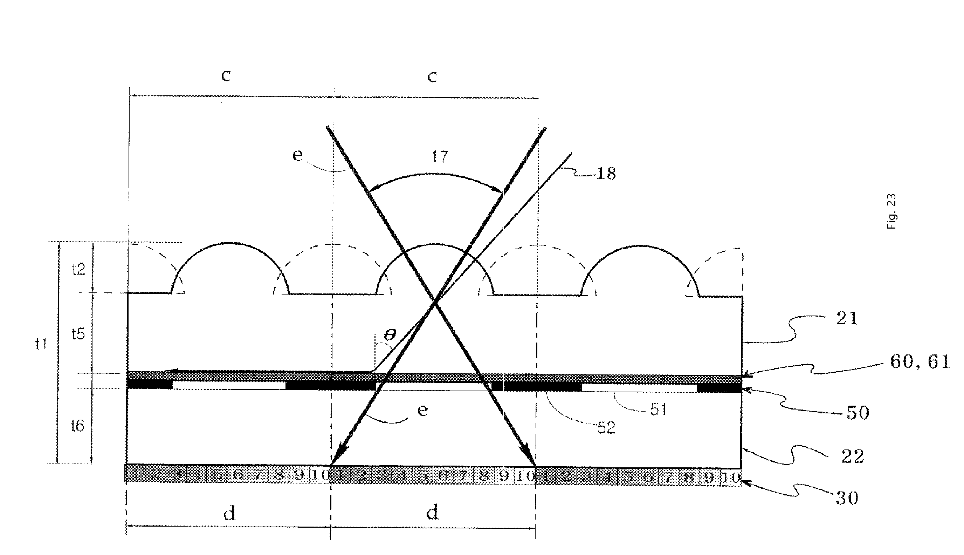

FIG. 23 is a cross-sectional view showing an embodiment in which a view angle induction mask and a total reflection induction layer are installed.

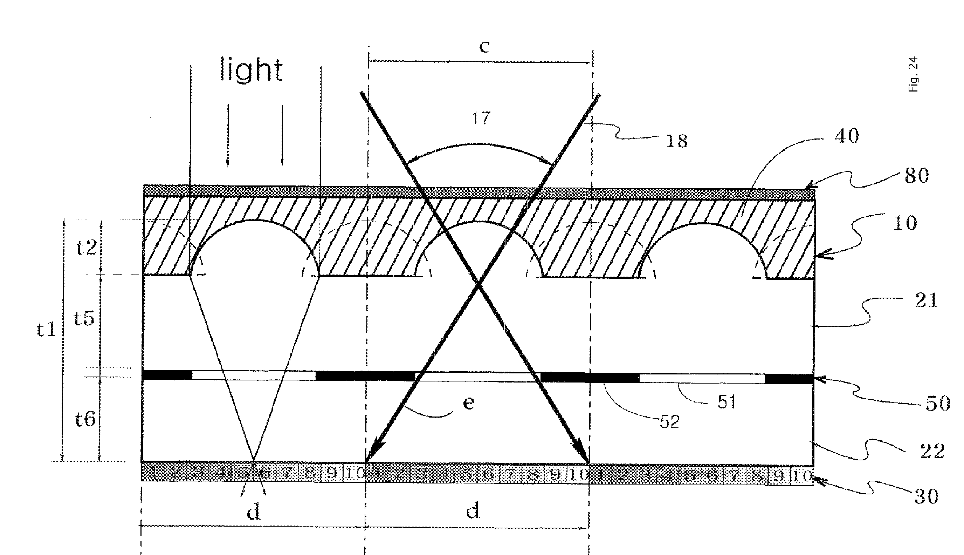

FIG. 24 is a cross-sectional view showing an embodiment in which a surface protection layer is installed.

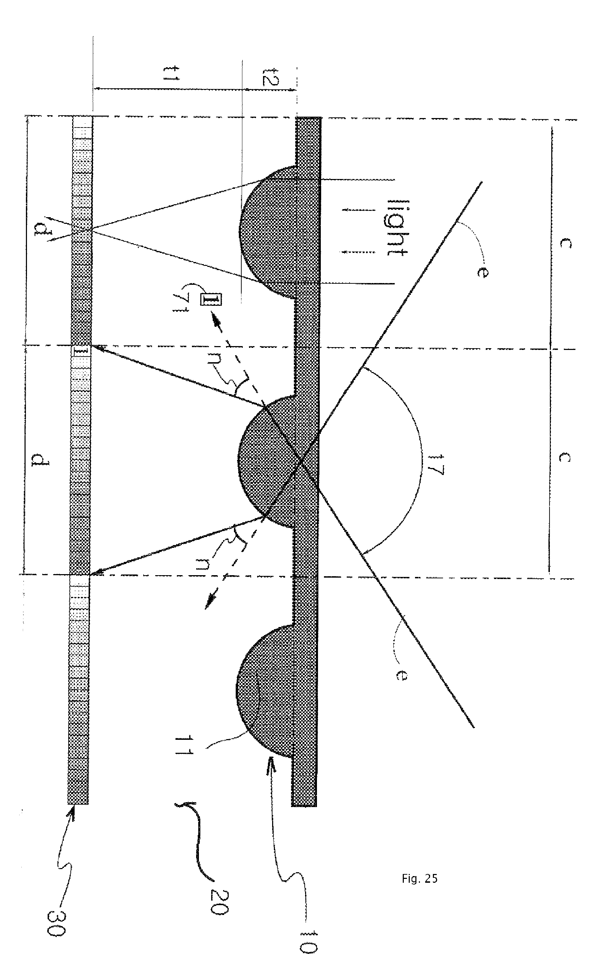

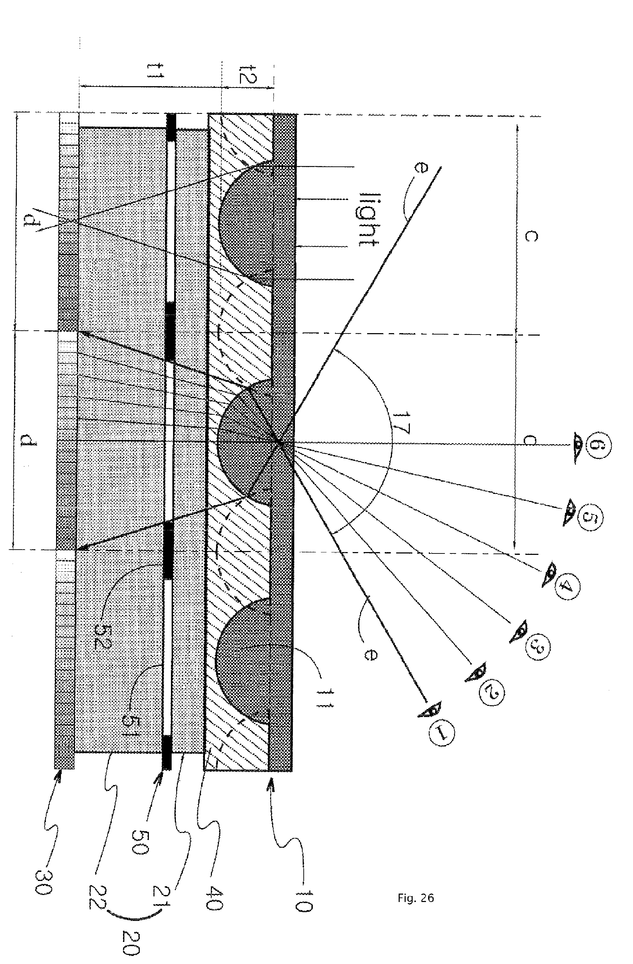

FIGS. 25 and 26 are cross-sectional views showing embodiments in which convex lenses are arranged downwardly.

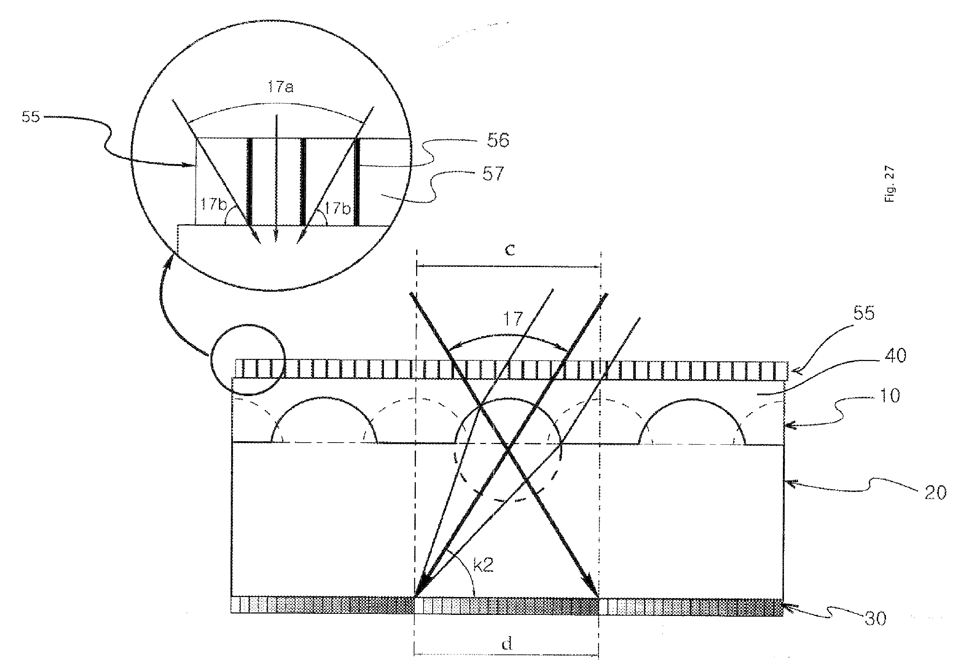

FIG. 27 is a cross-sectional view showing an embodiment in which a blind mask is installed on the lens array layer.

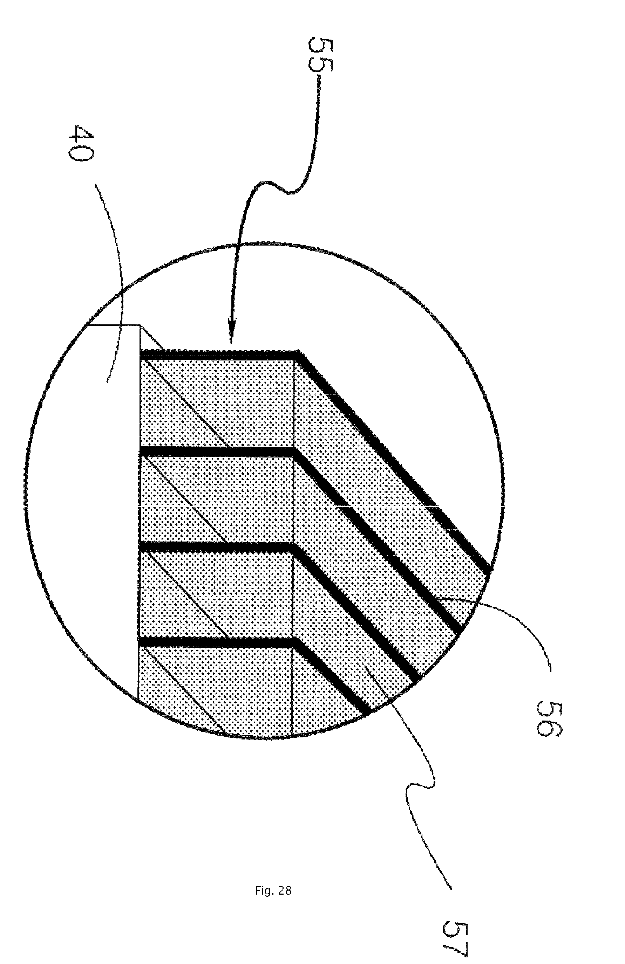

FIG. 28 is a perspective view showing a blind mask.

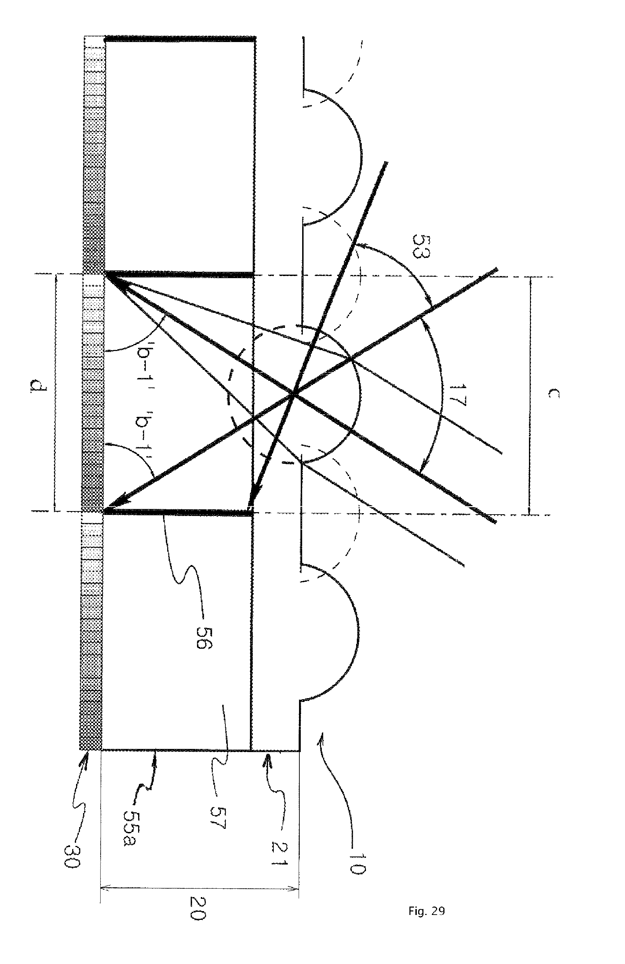

FIG. 29 is a cross-sectional view showing an embodiment in which a blind mask is installed in a focal distance securing layer.

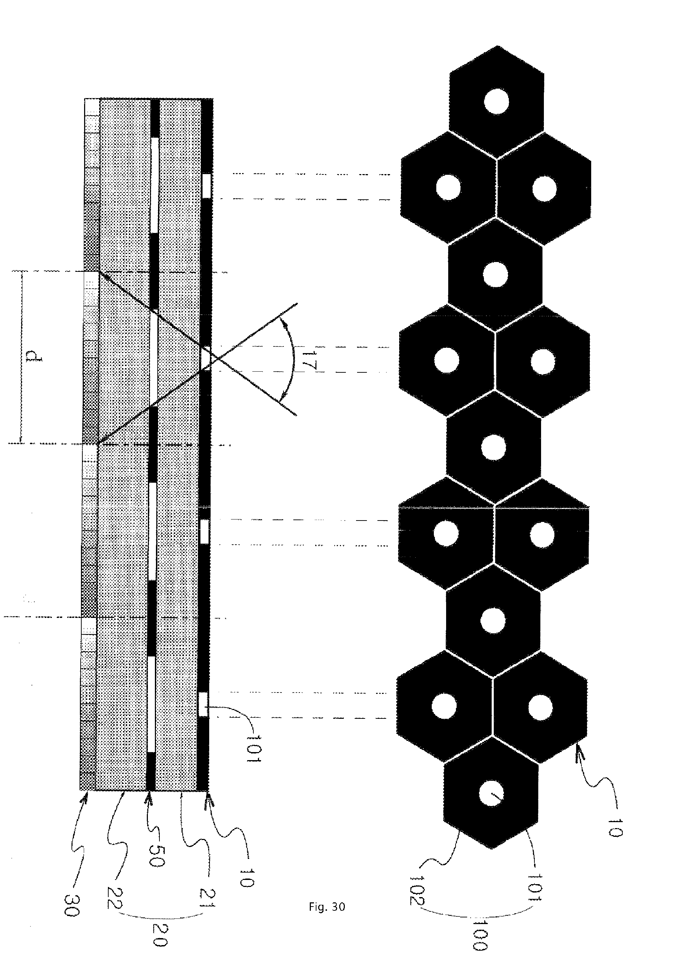

FIG. 30 is a view showing the concept of an embodiment in which a lens array is configured using pinholes.

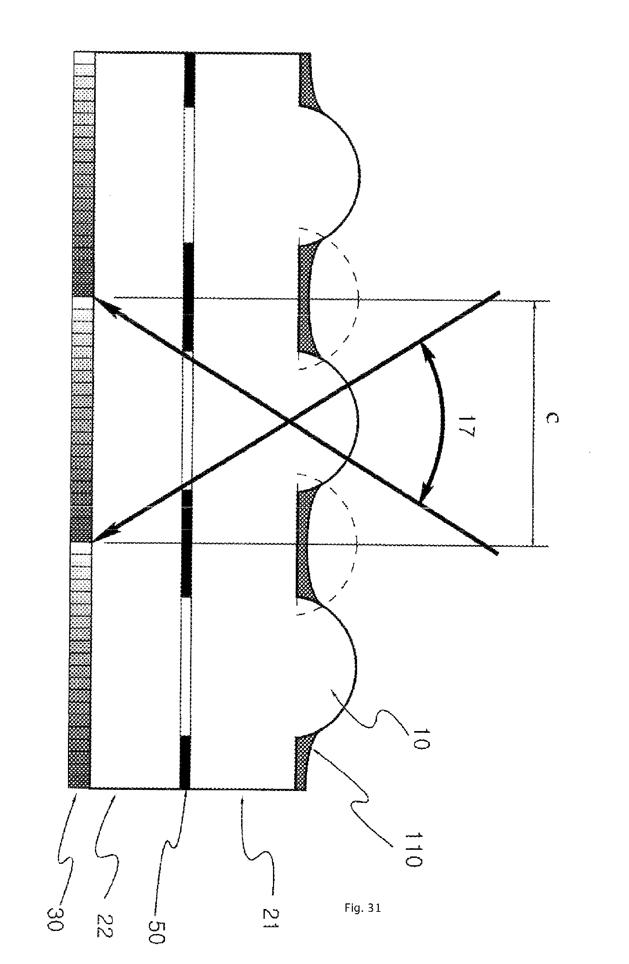

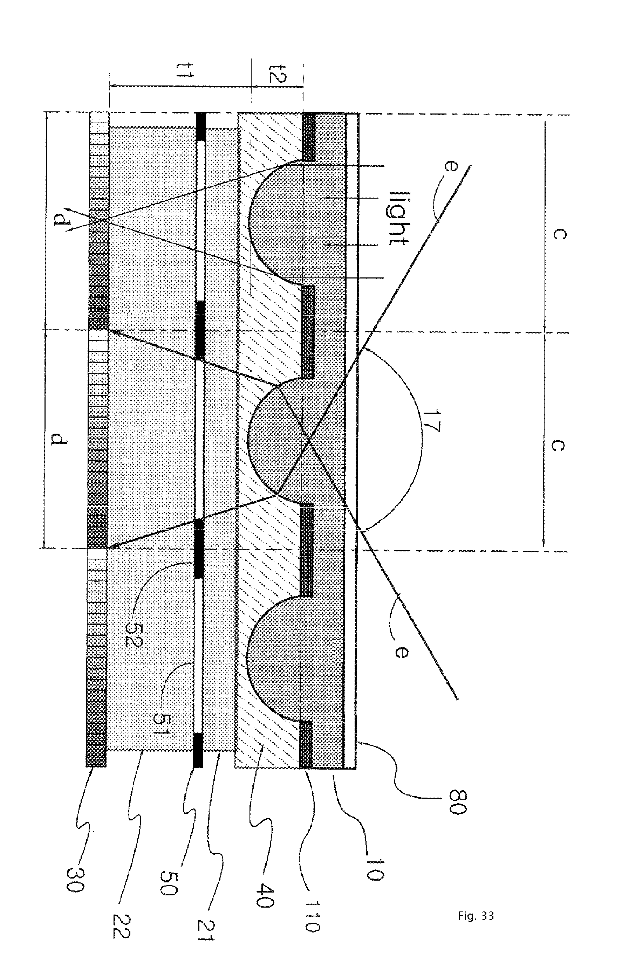

FIGS. 31 and 33 are cross-sectional views showing embodiments in which a mask for removing residual images is formed.

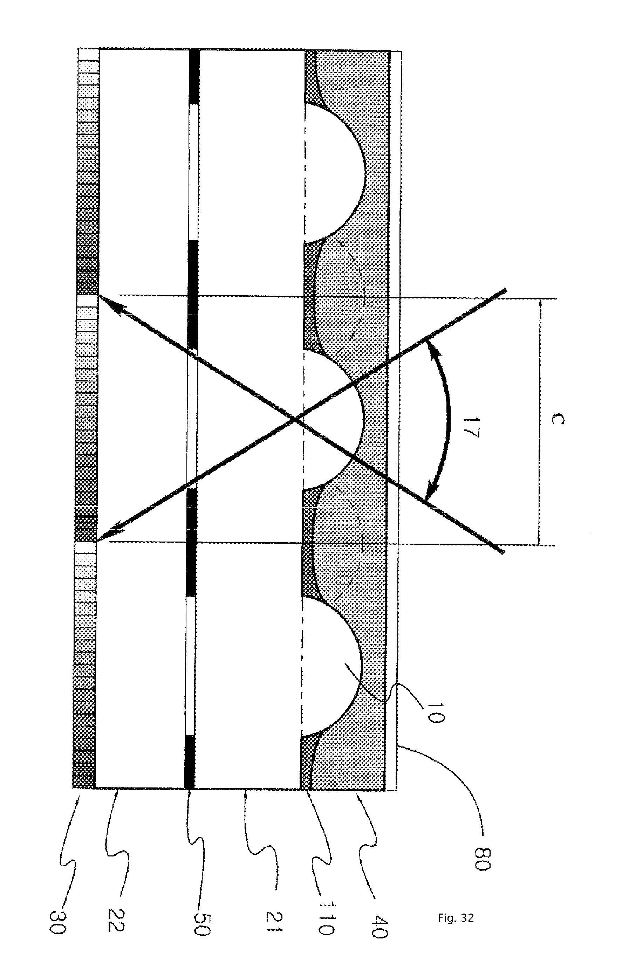

FIG. 32 is a view showing an embodiment in which a low refractive resin coating layer and a surface protection layer in FIG. 31 are formed.

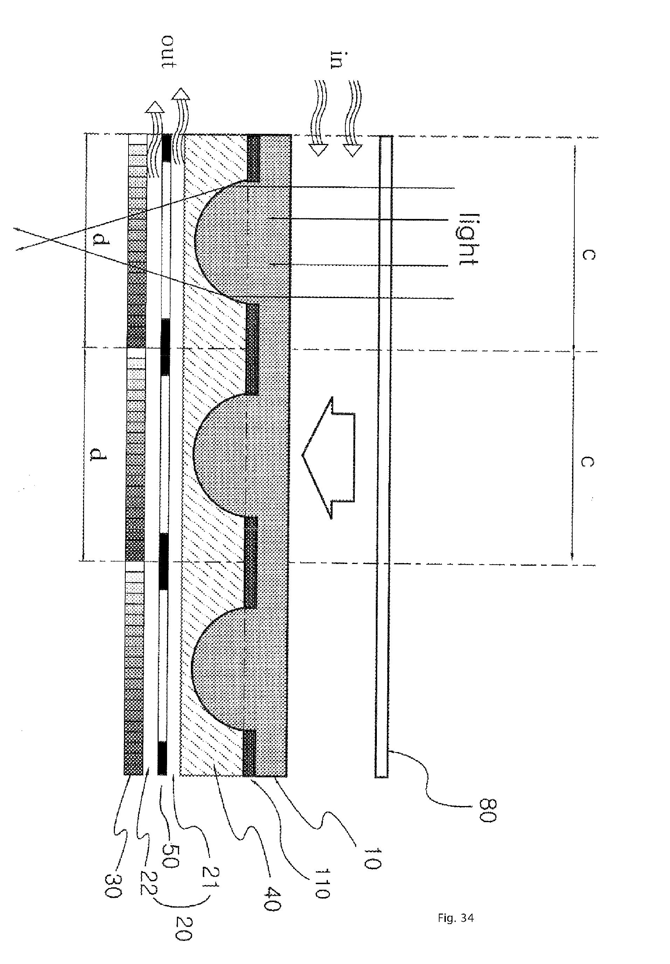

FIG. 34 is a view showing the concept of an embodiment in which a focal distance securing layer of FIG. 33 is flexibly configured.

## DESCRIPTION OF SYMBOLS

10: Lens array layer 11: Convex lens
17: Perspective angle of view
19: Blocking angle of view
20: Focal distance securing layer
21: Upper transparent layer
22: Lower transparent layer
30: Interlace layer 32: Unit image
40: Low refractive resin coating layer
50: View angle induction mask
51: Slit 52: Perspective blocking stripe
55, 55a: Blind mask 56: Partition
57: Low refractive resin 60: Cavity layer
61: Total reflection induction coating layer
80: Surface protection layer 100: Pinhole plate
101: Pinhole 102: Blocking unit
110: Residual image removal mask
d: Width of unit image p1: Lens pitch
p2: Horizontal pitch (Width of unit image)
y: Height of unit image h1, h2, h3: Horizontal axis
v1: Reference lens v2, v3: Vertical axis
t1: Focal distance (Optimum thickness)

## DETAILED DESCRIPTION OF THE PREFERRED EMBODIMENT

The preferred embodiments of the invention will be hereafter described in detail, with reference to the accompanying drawings.

FIG. 7 is an exploded perspective view showing a basic structure of the present invention.

As shown in the figure, the present invention is configured with a lens array layer 10 on which convex lenses 11 are arranged to be offset each other at a predetermined angle, a focal distance securing layer 20 for securing a focal distance by extending a synthetic resin material, which is the same as the lenses, on the bottom surface of the lens array layer 10, and an interlace layer 30 at the bottom in which rectangular interlace unit images are stacked (i.e., in the shape of so-called brick layering) to be offset each other.

The lens array layer 10 of the present invention is arranged in the form shown in FIGS. 8 and 9.

FIG. 8 is a view showing a lens array where convex lenses 11 of the same size are consecutively arranged to be offset each other by the slope of 60 degrees with respect to the vertical line. In this case, the value p1 of the vertical pitch of the lens array in which the convex lenses are consecutively contact with each other is equal to the value p2 of the horizontal pitch of the lens array.

In FIG. 9, convex lenses repeated at a slope of 45 degrees are vertically and horizontally offset each other to form the same pitch. At this point, the value of the consecutive pitches of the convex lenses is p1, and the value of the horizontal pitch is p2.

The convex lens 11 has a vertical cross section of a hemisphere shape, and the shape of the convex lens on a plan view is a polygon more than a triangle (the polygon includes polygons having round corners and circles). This is a configuration in which each of the lenses 11 is satisfied as a convex lens which is intended to form a focus.

Although a separate reference symbol is used for convenience in the specification, a pinhole 101 is a means that can substitute for the convex lens, and unless otherwise specified, the convex lens is referred to include the pinhole.

FIG. 10 shows a combined cross-sectional view of FIG.7. As shown in the figure, a transparent layer is extended to the interlace layer 30 below the lens array layer 10, and the transparent layer 20 is a means for securing a focal distance. Since the optimum thickness (the focal distance) t1 of a lenticular lens is generally a distance from the top of the convex lens 11 to the interlace layer 30, thickness t3 of only the transparent layer 20 is thickness subtracting the thickness t2 of the convex lens from the focal distance t1.

For reference, in the present invention, the focal distance t1 is a distance to a point where incident light passing through the entire lens surface is most densely focused, which is an optimum thickness showing an image most clearly. The method of calculating the optimum thickness like this is the same as that one used in fabricating a general lenticular sheet.

In the present invention, although the focal distance securing layer 20 is fabricated as one body together with the convex lens array layer if an image jump blocking means is not included, it may include a cavity layer (60 of FIG. 22) or may be separately assembled or attached as needed as shown in the other embodiments described below.

The interlace layer 30 is formed under the focal distance securing layer 20 as shown in FIG. 10. This has an array structure different from that of a conventional lenticular technique, which is a technique for securing an effective angle of view 17 that is further wider than that of the lenticular technique on condition that the radius of curvature and the pitch of the lenses are identical.

For example, if it is assumed that the conventional lenticular technique has six viewpoints, i.e., a perspective angle of view 16 interlacing six unit pixels, the present invention will have a perspective angle of view 17 capable of viewing a unit pixel interlacing ten or more super multi-viewpoints or a monitor (RGB) pixel (however, since the image jump phenomenon occurs even in this case, a means for removing the phenomenon will be described below).

FIG. 11 is the pattern structure of the interlace layer of the present invention, which is a view showing an array structure of the interlace layer 30 applied to the lens array layer 10 of a 60-degree array. As shown in the figure, in the interlace layer 30, a unit image 32 of a rectangular shape with a long width are repetitively arranged in a zigzag form like a brick layering structure while the center of the unit image is aligned with the center of a corresponding convex lens 11.

In the present invention, the width of a basic interlace image 32 (a horizontal angle of view) that the unit convex lens 11 may show is further wider than the diameter h of the convex lens as shown in FIG. 10. This means that a stereoscopic image display apparatus having a pitch value larger than that of a conventional lenticular technique (FIG. 2 or 4) by 173% can be fabricated.

Particularly, since the size of a unit pixel (RGB) of a display is limited in a glasses-free digital stereoscopic display image, further more viewpoints can be secured if further more unit pixels can be contained in the same lens as shown in the present invention, and on the contrary, if the number of viewpoints is decreased, the size of the lens can be reduced, and thus a resolution can be increased.

In the present invention, the interlace layer 30 may be an image printed on the outer surface of the focal distance securing layer 20 or an image displayed on a display such as a TV or the like tightly attached to the outer surface of the focal distance securing layer 20

FIG. 12 is a view showing an original picture of an eagle applied to the present invention and a picture photographing the interlace layer 30, which is an interlace pattern image fabricated according to the fabricating method described above.

FIGS. 11 and 3 ($\rightarrow$ 13) to 17 are views showing examples of the size of the interlace unit image 32 of the present invention according to various lens arrays of various convex lenses.

As is understood from the figures described above, the size of the interlace unit image 32 varies depending on the size of the convex lens and the array form of the convex lenses, and the size of the rectangular unit image 32 corresponding to the array of the lens array layer 10 can be calculated as described below.

The horizontal size d of the unit image 32 is a distance between two points (the shortest distance between two parallel vertical lines v2 - v3) where two vertical lines v2 and v3 vertically passing through the centers of left and right lenses adjacent to the reference convex lens v1 intersect with the horizontal line h1 horizontally passing through the center of the reference convex lens, and the vertical size y of the unit image is one half of the distance h2 - h3 connecting the centers of vertically arranged adjacent lenses.

The sizes of the horizontal width d=p2 and the vertical width y of the interlace unit image can be calculated by mathematical expressions 1 and 2 shown below.

[Mathematical expression 1]

$$p2 = 2\sqrt{p1^2 - (\frac{p1}{2})^2}$$

In the mathematical expression described above, p2 is a horizontal pitch value = the horizontal width d of a unit image, and p1 is a pitch value of lenses contacting with each other.

[Mathematical expression 2]

$$p2 = 2\sqrt{x^2 - y^2}$$

In the mathematical expression described above, p2 is a horizontal pitch value = the horizontal width d of a unit image, and the vertical width is y. x, y and z are lengths of the sides of the triangle shown in FIG. 13, which is configured by connecting center lines of adjacent lenses that are arranged to be offset with respect to vertically arranged lenses 11.

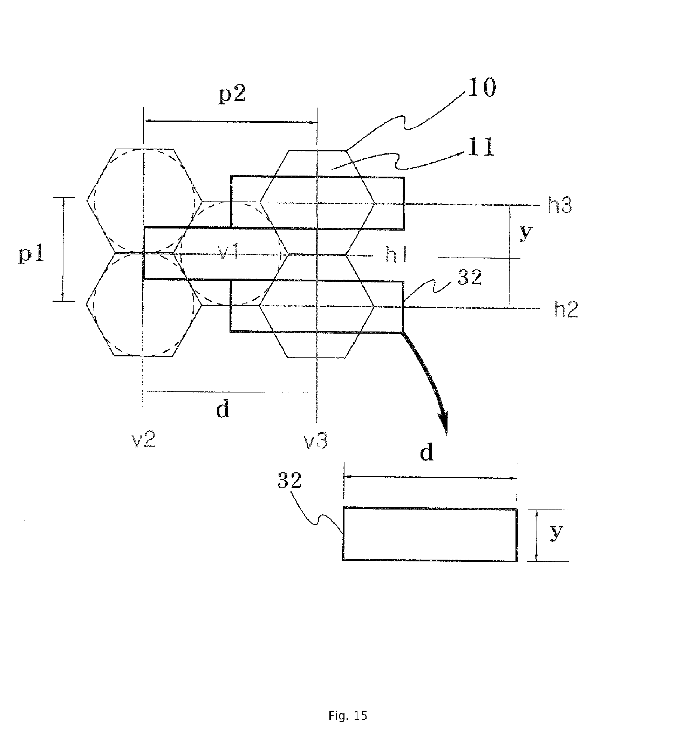

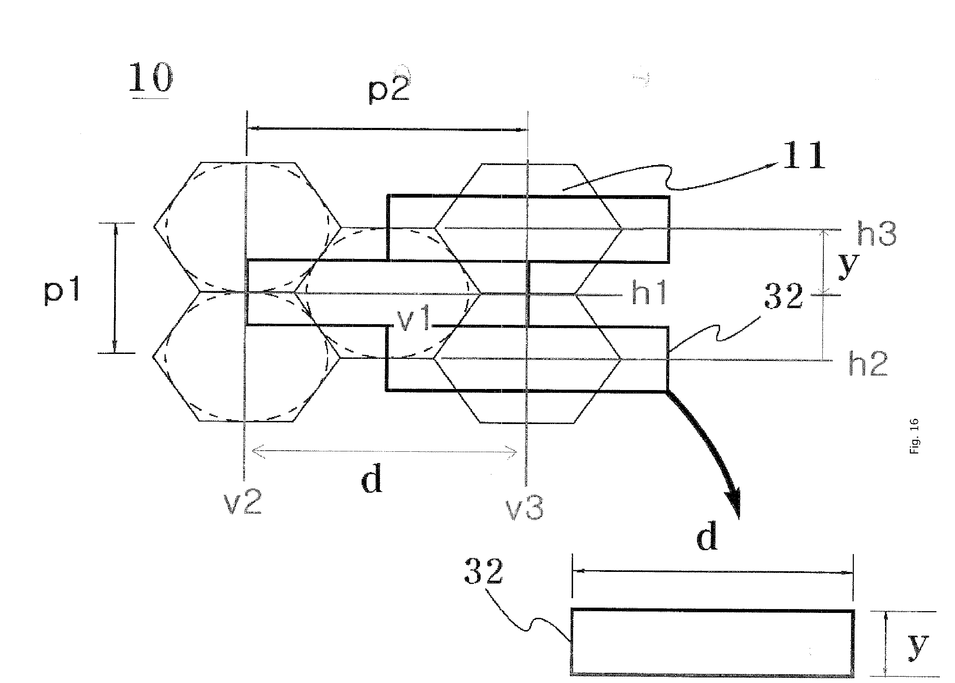

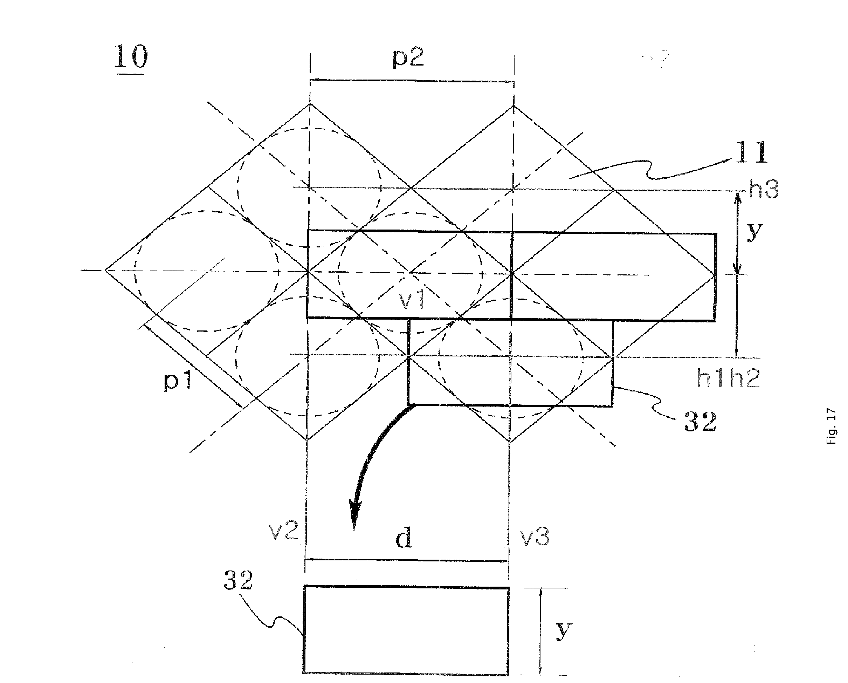

A size of the unit image is determined by the method or mathematical expressions described above even when the shape of the lens 11 on the plan view is formed in a polygonal shape as needed as shown in FIG. 15 or in the case of a polygonal or oval lens having horizontal and vertical curvatures different from each other as shown in FIGS. 16 and 17.

Particularly, the mathematical expressions are useful when the angle of view is intentionally increased or decreased in either of horizontal and vertical directions or when the size of the lens and the array structure of the lens array layer 10 according to the present invention are determined in a display device where a resolution or a size of a pixel (RGB) of a minimum unit configuring a screen is previously determined.

Next, a means for removing an image jump phenomenon will be described.

FIGS. 18 to 20 are views showing an example in which a view angle induction mask 50 is installed as a means for removing an angle of view 18 where an image jump phenomenon occurs in the present invention.

As shown in FIG. 18, the view angle induction mask 50 is installed in the middle of the focal distance securing layer 20. Accordingly, the focal distance securing layer 20 is divided into an upper transparent layer 21 and a lower transparent layer 22 with the intervention of the view angle induction mask 50.

Referring to FIGS. 18 and 19, in the view angle induction mask 50, the size of a slit 51 is tailored using a blocking stripe 52 so that the range 17 of the perspective view of angle is limited to the width d of the unit image of the interlace layer 30. Accordingly, since the perspective view is blocked by the blocking stripe 52 of the mask at an undesired angle of view 19, the image jump phenomenon does not occur.

The slit 51 of the view angle induction mask 50 is formed in the shape of brick layering like the interlace layer 30, and the blocking stripe 52 is formed around the slit (FIG. 19). Arrays of the lens array layer 10, the view angle induction mask 50, and the interlace layer 30 are preferably arranged so as to align the centers thereof.

Here, it is apparent that the blocking stripe 52 can be fabricated through printing or mirror deposition using a photoresist material or an opaque resin. In addition, the blocking stripe 52 can be fabricated using a digital type liquid crystal element or the like so that the position and the width of the blocking stripe may be adjusted by an electrical signal or the blocking stripe itself may be in a transparent state. It is since that if the size and the position of the slit 51 of the mask can be adjusted, the angle of view can be adjusted even when a product has been assembled, and thus this is very useful.

The view angle induction mask 50 is fundamentally different from a mask (slit) of a general barrier stereoscopic method. In the barrier stereoscopic method, if a pitch according to a perspective angle of view contains more interlace unit pixels, the slit of the mask becomes smaller, and thus the amount of light is reduced, whereas since the view angle induction mask 50 of the present invention is an element that does not limit the amount of light of the lens 11, a bright and clear stereoscopic screen can be viewed.

FIG. 20 is a view showing the range of perspective angle of view 17, the perspective blocking range 53, and the interlace layer 300 that can be shown through the adjacent slit 51-b while the view angle induction mask 50 is installed, and the image jump phenomenon does not occur in any one of the regions. It is since that a unit pixel adjacent to the convex lens of the perspective angle of view is in a region 53 blocked by the blocking stripe, and a next unit pixel is already in a region 54 out of the focal distance, and thus only the range of perspective angle of view 17 can be seen.

FIG. 21 is a view showing an example using a total reflection as still another means for blocking image jump.

The lens array layer 10 is arranged to have a constant perspective pitch c, and the upper transparent layer 21 is formed under the lens array layer. A coating layer 61 or a cavity layer 60 capable of inducing total reflection is formed between the bottom surface of the upper transparent layer and the interlace layer 30.

Therefore, an observer looking at the panel in front of the lens array layer 10 does not find an image jump phenomenon at an angle of view 18 larger than the perspective angle of view 17 due to the total reflection and may see only an image of the angle of view 17.

The total reflection generally occurs at a boundary surface of a medium when light passing through a medium of a high refractive index enters into a medium of a low refractive index. For example, if it is assumed that an angle at which the total reflection begins at a boundary surface between a transparent medium of a uniform refractive index and the air layer is θ, this angle is a threshold angle, and whole the light is reflected at a diagonal angle higher than the threshold angle.

Accordingly, if an interlace unit image exists at a position corresponding to the range of the perspective angle of view before the total reflection begins, the image jump phenomenon does not occur, and thus a clear and stable stereoscopic image can be enjoyed.

The threshold angle generating the total reflection will vary depending on the refractive index of a transparent medium. For example, if it is assumed that a medium configuring the convex lens 11 and the transparent layer 21 is acrylic resin, the refractive index of the acrylic resin is 1.49, and the threshold angle θ is 42.1522.

Accordingly, an angle at which the total reflection does not occur and incident light is focused is 84.3044, and the angle of this range is rendered as a perspective angle of view 17. Therefore, perspective directions of both ends only need to be set to unit pixel 1 where the pitch d of the unit image of the interlace layer starts and unit pixel 10 where the pitch d of the unit image ends.

However, an angle of injection (radiation of light), i.e., radiants, according to the threshold angle is generated as 0.7357 degrees, and this will act as an error range. Therefore, it is preferable to adjust the perspective angle of view 17 considering the radiants.

In addition, in FIG. 21, the transparent layer 20 is fabricated to have a thickness of t3. Then, the coating layer 61 for inducing total reflection is formed on the bottom surface of the transparent layer, and the cavity layer 60 is formed by putting a space under the coating layer, or only the cavity layer 60 is formed without the coating layer. The space is as wide as t4, and the figure shows that the total thickness from the top of the convex lens array layer 10 to the interlace layer 30 should be the focal distance t1.

However, if the cavity layer 60 is adopted as a means for inducing total reflection, only a very narrow space will be sufficient, and thus the upper transparent layer 21 formed on the bottom surface of the lens array layer 10 is almost as thick as the focal distance. A narrow gap formed when the upper transparent layer 21 is closely attached to the interlace layer 30 without direct contact is sufficient as the cavity layer 60 t6.

This method advantageously removes even residual images that may generate in a region out of the focus when the view angle induction mask 50 is used, while removing the perspective angle of view 18 at which images are jumping.

FIG. 22 is a view showing an embodiment in which the upper transparent layer 21 and the lower transparent layer 22 are formed as the focal distance securing layer 20 between the lens array layer 10 and the interlace layer 30, and the cavity layer 60 or a total reflection induction coating layer 61 is formed between the upper transparent layer 21 and the lower transparent layer 22.

The narrow gap formed only by stacking the upper transparent layer 21, and the lower transparent layer 22 or the interlace layer 30 becomes the cavity layer 60, and thus this method is very convenient in securing the focal distance t1.

If a method of filling a low refractive resin in the total reflection induction coating layer 61 between the upper transparent layer 21 and the lower transparent layer 22 of FIG. 22 is used even when the total reflection induction coating layer 61 is adopted, it could be a stacking method that can secure convenience of securing a focal distance, an adhesive or bonding function, and a total reflection function owing to the low refractive resin.

FIG. 23 is a view showing an embodiment configured by combining the view angle induction mask 50, and the total reflection induction cavity layer 60 or the coating layer 61.

As shown in the figure, the cavity layer 60 or the total reflection induction coating layer 61 is formed on the view angle induction mask layer 50. This is a configuration for complementing some residual images, which may generate when the total reflection occurs depending on the angle of movement of a viewpoint, using the view angle induction mask 50.

That is, since the total reflection generated at the total reflection induction layer begins from one side of a convex lens and gradually diffuses to the entire convex lens 11 along the moving direction of light, it is a problem occurring at a very minute angle that cannot be easily identified. However, the view angle induction mask 50 complements the negative phenomenon that occurs in the process.

The view angle induction mask 50 also slightly blurs an image and blocks a perspective direction, and since the total reflection induction cavity layer 60 or the coating layer 61 prevents such a phenomenon, they build a configuration complementing each other.

In FIG. 23, the positions of the cavity layer 60 or the total reflection induction coating layer 61 and the mask layer 50 may be reversed.

Next, a means capable of protecting the surface of the lens array layer 10 and obtaining an effect of further clear and abundant stereoscopic feelings is described below.

In FIG. 24, a low refractive resin coating layer 40 is formed on the surface of the lens array layer 10, and a protection film or a glass is attached on the surface of the low refractive resin coating layer 40 as a surface protection layer 80.

Although the surface protection layer 80 such as a protection film, a glass or the like prevents damages impacted on the surface of the lens 11 while using a product, if a low refractive resin 40 is used as a material for bonding or adhering the surface protection layer 80, irregular reflection generated on the surface of the convex lens 11 can be removed while the convex lens maintains collecting light.

However, the focal distance t1 of the convex lens 11 is lengthened in the lens array applied with the low refractive resin 40, and thus the effective angle of view 17 is narrowed. However, on the contrary, this is advantageous in expressing further profound and abundant stereoscopic feelings.

FIGS. 25 and 26 are views showing a method of expanding the perspective angle of view 17 by configuring the lens array layer 10 by arranging convex lenses downwardly.

As shown in FIG. 25, the surface of the lens array layer 10 is formed as a plate, and convex lenses 11 are arranged on the bottom downwardly. In this structure, since unit pixel 1 is shown at a position 71 refracted by a refraction angle n from the actual position, the perspective angle of view 17 is broadened as much, and the number of unit pixels that can be contained in a unit image d is increased as much.

However, in this structure, the medium of the focal distance securing layer 20 should have a refractive index lower than that of the convex lens 11. Accordingly, the focal distance securing layer 20 can be fabricated as a cavity, filled with a resin of a low refractive index or the like, or formed as one body together with the interlace layer 30 using the resin of a low refractive index.

FIG. 26 is a cross-sectional view showing an embodiment in which the lens array layer 10 where convex lenses are arranged downwardly is applied to the structure where the view angle induction mask 50 is configured. Since the total reflection does not occur in such a configuration, the total reflection induction cavity layer 60 or the coating layer 61 does not need necessarily.

Observing the structure of FIG. 26, the lens array layer 10 having convex portions formed downwardly, the low refractive resin coating layer 40 coated (adhered or bonded) with a low refractive resin on the bottom surface of the lens array layer 10, the upper transparent layer 21 bonded on the bottom surface of the coating layer, the view angle induction mask 50 configured on the bottom surface of the upper transparent layer 21, the lower transparent layer 22, and the interlace layer 30 are positioned in order.

Here, although the low refractive resin coating layer 40 and/or the upper transparent layer 21 is formed as a cavity layer 60, if the stacked layers corresponding to the focal distance t1 are maintained, the effects of the present invention can be obtained apparently.

Next, an example using a blind mask as a means for preventing image jump is described.

FIG. 27 is a cross-sectional view showing an embodiment in which a blind mask 55 is installed on the surface of the lens array layer 10. As shown in the figure, the blind mask 55 is formed on the low refractive resin coating layer 40 of the lens array layer 10.

In the blind mask 55, thin plate type partitions 56 having a predetermined height are arranged at regular intervals, and as shown in FIG. 28, the space 57 between the partitions is filled with a transparent material. The partition 56 is formed of an opaque material (an ink, an evaporation material such as a metal, an opaque resin or the like) and blocks perspective view.

Observing the partially enlarged view of FIG. 27, it is understood that the range of the perspective angle of view is affected by the height and intervals of the partitions 56. Since the perspective angle of a diagonal line passing the bottom of an adjacent screen 56 from the top of a partition 56 is the maximum side surface angle of view 17b of the blind mask, and thus it needs to fabricate the blind mask such that the maximum side surface angle of view 17b becomes a maximum side surface angle of view k2 at which both ends of an interlace unit image can be stably viewed.

FIG. 29 is a cross-sectional view showing an example in which the blind mask 55a is installed in the focal distance securing layer 20. As shown in the figure, the blind mask 55a is formed between the interlace layer 30 and the lens array layer 10.

In this case, preferably, the plate type partition 56 of the blind mask 55a is erected such that the bottom of the partition contacts with the border line of the interlace unit image, and the height is determined so as to have an angle of view 53 that can block the perspective view of adjacent pixels, and in addition, the space between the partitions 56 is filled with a transparent material 57.

FIG. 30 is a view showing a lens array layer 10 configured by substituting a pinhole 101 for the convex lens 11 of the present invention, as still another embodiment of the present invention. As shown in the figure, the pinhole 101 substitutes for the convex lens 11, which is a constitutional component of the lens array layer 10 of the present invention, so that an image of the interlace layer 30 can be shown through the pinhole 101.

In the same manner as the convex lenses are arranged, a pinhole plate 100 is arranged such that the pinhole 101 formed at the center thereof is aligned with the center of a unit image of the interlace layer 30. Although an example installing the view angle induction mask 50 is described in the embodiment, apparently, it is not limited thereto.

A lens array layer 10 (although a pinhole is used instead of a lens, it is referred to as a 'lens array layer' for convenience) in which pinhole plates 100 are arranged is configured with pinholes 101, i.e., openings, and light blocking units 102, and the light blocking unit 102 can be formed of an opaque material (a synthetic resin ink, evaporation of a reflective material, a reflective ink or the like) as described above.

In addition, the light blocking unit 102 is preferably configured of a digital liquid crystal or a digital display device so that the size of the pinhole 101 can be adjusted by an electrical signal. In this case, if the size of the pinhole continues to grow so that the pinhole disappears and the entire lens array layer turns into a transparent state, this function can be a means capable of selecting a flat image or a stereoscopic image.

Although the hexagonal shape of the pinhole plate 100 is shown as a white line in the figure of the embodiment for convenience, light does not pass through the areas adjacent thereto. That is, the light blocking units of all the pinhole plates are connected as one body, and only the pinholes are aligned. However, although the hexagon can be a control unit when the size or the position of the pinhole is controlled by a digital signal, light does not pass through the adjacent parts even in this case.

FIG. 31 is a view showing an embodiment in which a residual image removal mask 110 is formed in the valley formed between convex lenses 11 so as to remove residual images of a stereoscopic image.

Generally, the lens array layer 10 has a space that is not formed as a lens between convex lenses, and minute residual images are generated when images viewed through the space and images viewed through the convex lens 11 interfere with each other.

Accordingly, such a problem can be solved if a tiny micro-lens or the like is formed so that light traveling straight through the space cannot pass through or the residual image removal mask 110 is installed through evaporation of a reflective material or using an opaque material, a liquid crystal or the like.

FIG. 31 is a view showing an embodiment in which the residual image removal mask 110 is formed in a space where a lens is not formed, FIG. 32 is a view showing an embodiment in which the surface protection layer 80 is bonded on the residual image removal mask 110 with a low refractive resin 40, and FIG. 33 is a view showing the residual image removal mask 110 formed in an embodiment in which convex lenses are arranged downwardly.

FIG. 34 is a view showing an embodiment in which the focal distance securing layer 20 of the present invention is flexibly configured. A variety of strictures can be used as a means for moving the interval of the focal distance.

Such a structure is particularly useful when a display screen of a television set or the like is formed of the interlace layer 30. For example, it is since that if an image transmitted and projected on the interlace layer 30 is a flat image, the image can be transformed into a general screen if it goes out of the focal distance by moving the lens array layer 10.

Although FIG. 34 shows a configuration in which the focal distance securing layer 20 of the embodiment shown in FIG. 33 is formed as a cavity (or the cavity layer can be filled with a liquid material), and a focal distance and a non-focal distance can be selected through a means that takes in and out air (or the liquid material), it is not limited to such an embodiment.

Accordingly, even when the view angle induction mask 50 is installed in the focal distance securing layer 20, the display panel is fabricated so as to configure the upper transparent layer 21 and the lower transparent layer 22 as a cavity structure and flexibly adjust the focal distance and the non-focal distance in a method of moving only the lens array layer 10 or the lens array layer 10 and the view angle induction mask 50 together.

According to claims 1 to 8, there is provided a stereoscopic image display panel capable of expanding an effective angle of view to the maximum while displaying all kind of flat images as a stereoscopic image.

According to claims 9 to 15 or 17, there is provided a stereoscopic image display panel capable of removing an 'image jump phenomenon'.

According to claim 8, there is provided a display panel capable of replacing various kinds of images at regular intervals or providing a moving image, as well as providing the same object at all times.

According to claims 11, 16 and 20, there is provided a display panel that can remove unnecessary residual images and secure further clear images through minute adjustment.

According to claims 21 and 22, there is provided a display panel that can selectively show a flat (2D) image by putting an image of the interlace layer at a non-focal distance or a stereoscopic (3D) image by putting the image at a focal distance.

While the present invention has been described with reference to the particular illustrative embodiments, it is not to be restricted by the embodiments but only by the appended claims. It is to be appreciated that those skilled in the art can change or modify the embodiments without departing from the scope and spirit of the present invention.

**Claims**

1. A structure of an integral photography display panel comprising:

    a lens array layer 10 on which unit convex lenses 11 are arranged to be offset each other, an interlace layer 30 positioned at a focal distance t1 below the lens array layer 10, and a focal distance securing layer 20 for positioning the interlace layer at the focal distance of the lens array layer, wherein the interlace layer 30 is stacked in a structure of so-called brick layering in which a center of a unit image is arranged to be aligned with a center of a unit convex lens using an image photographed from multi-viewpoints and interlaced into a rectangle as the unit image 32.

2. The structure according to claim 1, wherein the convex lens 11 has a vertical cross section of a hemisphere shape and a layer cross section of a polygon shape more than a triangle.

3. The structure according to claim 1, wherein the convex lens 11 is a polygon having a curvature and a length that are different in horizontal and vertical directions.

4. The structure according to claim 1, wherein the convex lens 11 is a lens having a refractive index higher than that of a medium of the focal distance securing layer 20 ($\leftarrow$ 10), and a convex portion of the lens formed on a plate is arranged toward the interlace layer 30.

5. The structure according to claim 1, wherein the convex lens 11 is a pinhole 101.

6. The structure according to any one of claims 1 to 5, wherein the convex lenses of the lens array layer 10 are arranged in horizontal and vertical directions, and a straight line passing through centers of adjacent lenses intersects with a vertical line at a slope of 45 or 60 degrees in a x shape so as to form an array of a so-called honeycomb shape.

7. The structure according to claim 6, wherein horizontal and vertical sizes of the unit image 32 arranged on the interlace layer 30 are such that the horizontal size d is a distance between two points where two vertical lines v2 and v3 vertically passing through centers of left and right lenses adjacent to a reference convex lens intersect with a horizontal line h1 horizontally passing through a center of the reference convex lens, and the vertical size y is one half of a distance h1 - h2 ($\rightarrow$ h2 - h3) connecting centers of vertically arranged adjacent lenses.

8. The structure according to claim 7, wherein the unit image 32 is an image of a display device printed or displayed by an electrical signal.

9. The structure according to claim 8, wherein the focal distance securing layer 20 includes an image jump blocking means for preventing penetration of adjacent unit images.

10. The structure according to claim 9, wherein the image jump blocking means is a view angle induction mask 50 provided with a perspective blocking stripe 52 around a slit 51.

11. The structure according to claim 10, wherein a position and a width of the perspective blocking stripe 52 can be adjusted by an electrical signal.

12. The structure according to claim 9, wherein the image jump blocking means is a total reflection induction layer.

13. The structure according to claim 12, wherein the total reflection induction layer is a low refractive resin layer 61 or a cavity layer 50.

14. The structure according to claim 9, wherein the image jump blocking means is a view angle induction mask 50 and a total reflection induction layer.

15. The structure according to claim 9, wherein the image jump blocking means is a blind mask 55a.

16. The structure according to claim 9, wherein the lens array layer 10 is formed with a low refractive resin coating layer 40 having a refractive index lower than that of the convex lens on a surface.

17. The structure according to claim 8, further comprising
a low refractive resin coating layer 40 and a blind mask 55 for blocking image jump on a surface of the lens array layer 10.

18. The structure according to claim 16, wherein the low refractive resin coating layer 40 is bonded with a surface protection layer on the surface.

19. The structure according to claim 9, wherein a size or a position of the pinhole 101 is controlled by an electrical signal.

20. The structure according to claim 9, wherein the lens array layer 10 is formed with a residual image removal mask 110 on a surface of a space between the convex lenses 11.

21. The structure according to claim 9, wherein the focal distance securing layer 20 is formed as a cavity layer so that a space between the lens array layer 10 and the interlace layer 30 may be adjusted.

22. The structure according to claim 21, wherein the cavity layer is filled with a transparent liquid material.

Image photographed(captured) in each perspective direction

Fig. 1

Fig. 2

EP 2 597 504 A2

Fig. 3

15

Fig. 4

(A)

(B)

Fig. 5

(A)

(B)

Fig. 6

18

Fig. 7

Fig. 8

Fig. 9

Fig. 10

EP 2 597 504 A2

22

Fig. 11

(Original)

d   d

30

Fig. 12

(Interace Image)

Fig. 13

EP 2 597 504 A2

25

Fig. 14

Fig. 15

Fig. 16

Fig. 17

Fig. 18

EP 2 597 504 A2

Fig. 19

10

52

51

50

31

EP 2 597 504 A2

Fig. 20

32

Fig. 21

EP 2 597 504 A2

Fig. 22

34

Fig. 23

Fig. 24

Fig. 25

EP 2 597 504 A2

37

EP 2 597 504 A2

Fig. 26

38

Fig. 27

Fig. 28

EP 2 597 504 A2

Fig. 29

41

Fig. 30

Fig. 31

Fig. 32

EP 2 597 504 A2

Fig. 33

Fig. 34

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 1020070072590, Levecu Xavier